# EUROPEAN PATENT APPLICATION

(11) **EP 0 588 469 A1**
(43) Date of publication of application: **23.03.1994**
(21) Application number: 93304414.1
(22) Date of filing: 07.06.1993
(51) Int. Cl.: G06F 13/40, G05F 1/577, H02H 9/02

(54) **Personal computer with SCSI bus power control**

(30) Priority: 17.09.1992 US 947011
(71) Applicant: INTERNATIONAL BUSINESS MACHINES CORPORATION, Armonk, N.Y. 10504 (US)
(72) Inventor: Keener, Don Steven, Boca Raton, Florida 33486 (US); Moore, Gregory James, Boca Raton, Florida 33433 (US); Stine, Eric Speestra, Delray Beach, Florida 33444 (US)
(74) Representative: Burt, Roger James, Dr.

(57) **Abstract**

This invention relates to personal computers, and more particularly to a personal computer using a small computer systems interface (SCSI) controller for controlling data transfer with storage memory devices such as fixed or removable media electromagnetic storage devices. A personal computer system in accordance with this invention has a SCSI bus with a first portion for operative interconnection of the SCSI controller with any SCSI devices connected through a planar board and a second SCSI bus portion for operative interconnection of the SCSI controller with any SCSI devices mounted remotely from the planar board. A power supply for supplying electrical power to any SCSI devices operatively connected to the SCSI controller by either of the first and second SCSI bus portions has a thermistor for limiting the current drawn by any SCSI devices operatively connected to the SCSI controller by either of the bus portions and a pair of diodes each for isolating a respective corresponding portion of the SCSI bus.

## Description

### Technical Field

This invention relates to personal computers, and more particularly to a personal computer using a small computer systems interface (SCSI) controller for controlling data transfer with storage memory devices such as fixed or removable media electromagnetic storage devices.

### Background of the Invention

Personal computer systems in general and IBM personal computers in particular have attained widespread use for providing computer power to many segments of today's modern society. Personal computer systems can usually be defined as a desk top, floor standing, or portable microcomputer that consists of a system unit having a single system processor and associated volatile and non-volatile memory, a display monitor, a keyboard, one or more diskette drives, a fixed disk storage, and an optional printer. One of the distinguishing characteristics of these systems is the use of a motherboard or system planar to electrically connect these components together. These systems are designed primarily to give independent computing power to a single user and are inexpensively priced for purchase by individuals or small businesses. Examples of such personal computer systems are IBM's PERSONAL COMPUTER AT and IBM's PERSONAL SYSTEM/2 Models 25, 30, L40SX, 50, 55,56, 57, 65, 70, 80, 90 and 95.

These systems can be classified into two general families. The first family, usually referred to as Family I Models, use a bus architecture exemplified by the IBM PERSONAL COMPUTER AT and other "IBM compatible" machines. The second family, referred to as Family II Models, use IBM's MICRO CHANNEL bus architecture exemplified by IBM's PERSONAL SYSTEM/2 Models 50 through 95. The Family I models typically have used the popular INTEL 8088 or 8086 microprocessor as the system processor. These processors have the ability to address one megabyte of memory. The Family II models typically use the high speed INTEL 80286, 80386, and 80486 microprocessors which can operate in a real mode to emulate the slower speed INTEL 8086 microprocessor or a protected mode which extends the addressing range from 1 megabyte to 4 Gigabytes for some models. In essence, the real mode feature of the 80286, 80386, and 80486 processors provide hardware compatibility with software written for the 8086 and 8088 microprocessors.

As the development of personal computers has advanced, there have been proposals for certain standards to be established among makers and users of such apparatus for the purpose of enabling greater exchangability of components and the like. One such standard which has achieved some broad acceptance is the small computer systems interface (SCSI) standard for data communication to and from storage memory devices. For the present purposes, "storage memory devices" is defined broadly to include all devices capable of storing data in digital form, with particular emphasis on such devices as fixed or removable media electromagnetic storage devices (also known as hard and floppy disk drives), electro-optical, tape and other storage devices. SCSI controllers have been known and used prior to this invention, and will be familiar to the knowledgeable reader.

In prior personal computer systems, SCSI controllers have typically been arranged as option or accessory devices, accessed by the system through the accessory or input/output or I/O bus. More recently, it has been contemplated to provide a SCSI controller as a single very large scale integrated (VLSI) device or application specific integrated circuit (ASIC) chip, and to provide for connection of that controller directly with the local processor bus. The purpose of so providing such a controller is to achieve enhanced performance in terms of expedited data transfers.

In any SCSI subsystem, it is necessary to provide power supply to the SCSI storage devices which may be addressed. Such power has typically been derived from a +5 volt portion of a computer power supply, and deliveredthrough an arrangement of a current limiting device and an isolation device. The isolation device (typically a diode) is used to insure that no current is drawn from the computer power supply when the controller is powered down or unpowered and no SCSI device is active. The current limiting device (typically a thermistor) is usedto insure that excessive current drain on the power supply is avoided in any event. The SCSI bus is "open drain" in nature and the two devices mentioned are both resistive in nature, leading to a reduction in the high level of direct current (DC) voltage input to a SCSI receiver in a SCSI device attached to the bus under discussion. Such input power reduction results in a loss of "noise margin" in the system, namely the difference between the peak voltage supplied and the signal voltage used. Measurements of some existing systems have shown that SCSI receivers specified as having a 2.0 volt high level may be supplied with a terminator voltage of 2.1 to 2.8, making any loss of noise margin intolerable if satisfactory performance is to be obtained. These difficulties are compounded where provisions are made for splitting a SCSI bus between one portion provided for accessing SCSI devices through planar board connections and a second portion provided for accessing SCSI devices through cabled connections, as is likely to occur where a SCSI controller is planar mounted.

### Brief Description of the Invention

Having in mind the foregoing discussion, this invention provides a power supply arrangement which increases terminator power and thereby improves signal noise margins. In accomplishing this result, the system of the present invention divides the power supply for a divided SCSI bus while retaining a single current limiting device so as to provide overall management of current drawn.

### Brief Description of the Drawings

Some of the objects of the invention having been stated, other objects will appear as the description proceeds, when taken in connection with the accompanying drawings, in which:
Figure 1 is a perspective view of a personal computer embodying this invention;
Figure 2 is an exploded perspective view of certain elements of the personal computer of Figure 1 including a chassis, a cover, and a planar board and illustrating certain relationships among those elements;
Figure 3 is a schematic view of certain components of the personal computer of Figures 1 and 2;
Figure 4 is a schematic representation of certain functional components as used in prior art arrangements; and
Figure 5 is a schematic representation of certain functional components as used in accordance with the present invention.

### Detailed Description of Invention

While the present invention will be described more fully hereinafter with reference to the accompanying drawings, in which a preferred embodiment of the present invention is shown, it is to be understood at the outset of the description which follows that persons of skill in the appropriate arts may modify the invention here described while still achieving the favorable results of this invention. Accordingly, the description which follows is to be understood as being a broad, teaching disclosure directed to persons of skill in the appropriate arts, and not as limiting upon the present invention.

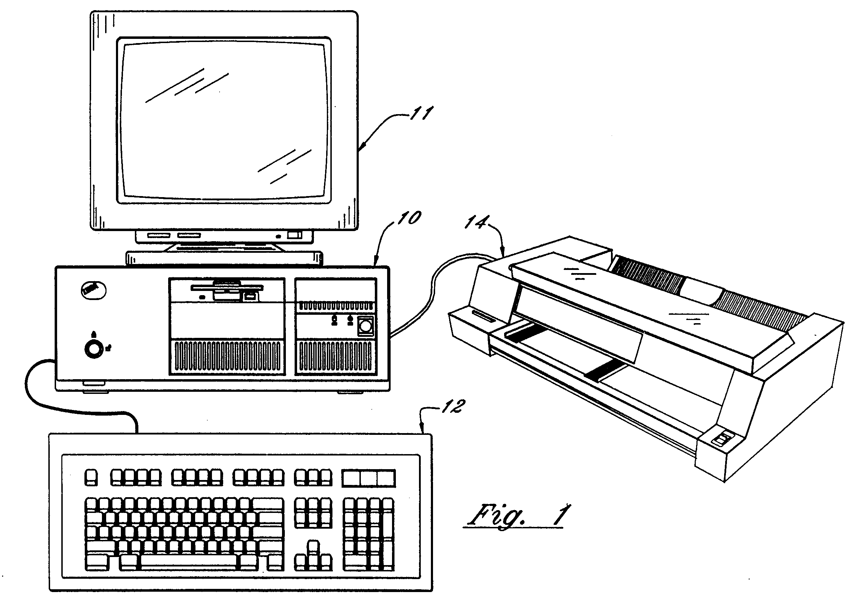

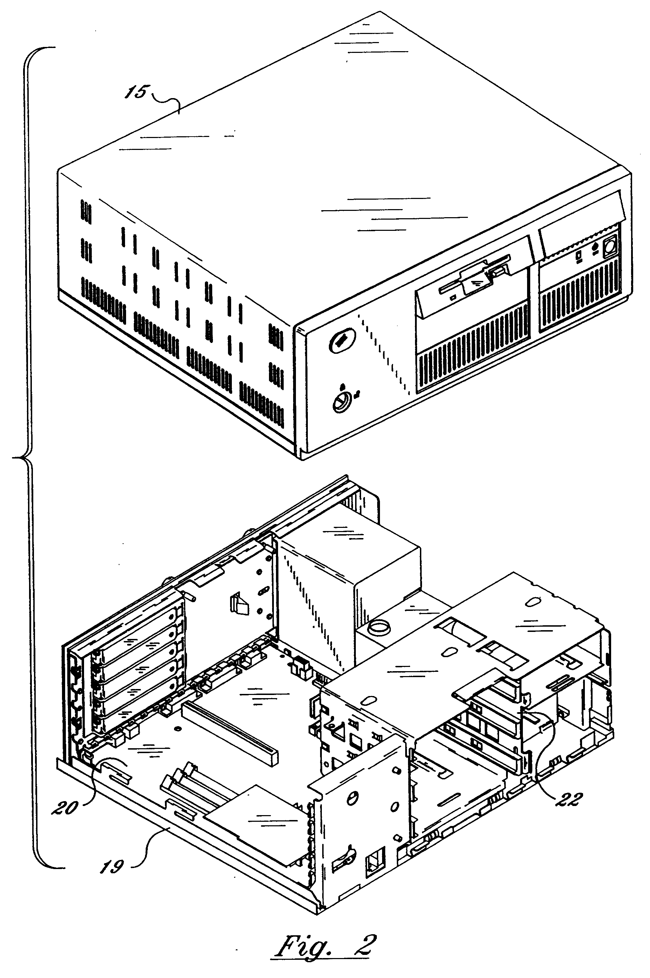

Referring now more particularly to the accompanying drawings, a microcomputer embodying the present invention is there shown and generally indicated at 10 (Figure 1). As mentioned hereinabove, the computer 10 may have an associated monitor 11, keyboard 12 and printer or plotter 14. The computer 10 has a cover 15 which cooperates with a chassis 19 in defining an enclosed, shielded volume for receiving electrically powered data processing and storage components for processing and storing digital data, as shown in Figure 2. At least certain of these components are mounted on a multilayer planar 20 or motherboard which is mounted on the chassis 19 and provides a means for electrically interconnecting the components of the computer 10 including those identified above and such other associated elements as floppy disk drives, various forms of direct access storage devices, accessory cards or boards, and the like. A power supply indicated at 21 supplies electrical power to components of the personal computer 10 including those mounted on the planar board and those mounted remotely from the planar board as described more fully hereinafter. As used herein, the words "remotely" or "remote" refer to a physical separation regardless of the extent of that separation. That is, a component is considered "remote" from the planar board even if the physical separation is a matter of inches or feet.

The chassis 19 has a base and a rear panel (Figure 2) and defines at least one open bay for receiving a data storage device such as a disk drive for magnetic or optical disks, a tape backup drive, or the like. In the illustrated form, an upper bay 22 is adapted to receive peripheral drives of a first size (such as those known as 3.5 inch drives). A floppy disk drive, a removable media direct access storage device capable of receiving a diskette inserted thereinto and using the diskette to receive, store and deliver data as is generally known, may be provided in the upper bay 22.

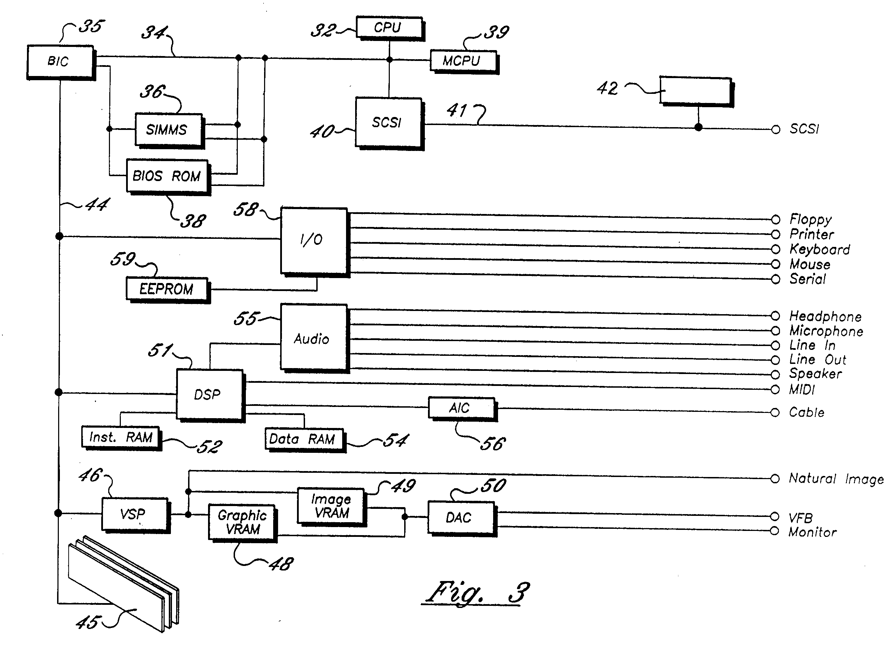

Prior to relating the above structure to the present invention, a summary of the operation in general of the personal computer system 10 may merit review. Referring to Figure 3, there is shown a block diagram of a personal computer system illustrating the various components of the computer system such as the system 10 in accordance with the present invention, including components mounted on the planar 20 and the connection of the planar to the I/O slots and other hardware of the personal computer system. Connected to the planar is the system processor 32. While any appropriate microprocessor can be used as the CPU 32, one suitable microprocessor is the 486SLC which is manufactured by IBM. The CPU 32 is connected by a high speed CPU local bus 34 to a bus interface control unit 35, to volatile random access memory (RAM) 36 here shown as Single Inline Memory Modules (SIMMs) and to BIOS ROM 38 in which is stored instructions for basicinput/output operations to the CPU 32. The BIOS ROM 38 includes the BIOS that is used to interface between the I/O devices and the operating system of the microprocessor 32. Instructions stored in ROM 38 can be copied into RAM 36 to decrease the execution time of BIOS.

While the present invention is described hereinafter with particular reference to the system block diagram of Figure 3, it is to be understood at the outset of the description which follows that it is contemplated that the apparatus and methods in accordance with the present invention may be used with other hardware configurations of the planar board. For example, the system processor could be an Intel 80286 or 80386 microprocessor.

Returning now to Figure 3, the CPU local bus 34 (comprising data, address and control components) also provides for the connection of the microprocessor 32 with a math coprocessor 39 and a Small Computer Systems Interface (SCSI) data flow controller 40. The SCSI controller 40 may, as is known to persons skilled in the arts of computer design and operation, be connected or connectable by way of a SCSI bus 41 with suitable direct access storage devices of a variety of types. The SCSI controller 40 functions as a storage controller in controlling storage memory devices such as fixed or removable media electromagnetic storage devices (also known as hard and floppy disk drives), electro-optical, tape and other storage devices. One such device is schematically illustrated in Figure 3 at 42. While here illustrated as being a device connected directly with the local processor bus 34, the present invention also contemplates that the SCSI controller 40 may be provided as an option device connected through the I/O bus 44 mentioned hereinafter. Depending upon the particular system configuration involved, such connection by way of the I/O bus may be preferable and/or the only connection available for practice of this invention.

The bus interface controller (BIC) 35 couples the CPU local bus 34 with an I/O bus 44. By means of the bus 44, the BIC 35 is coupled with an optional feature bus such as a MICRO CHANNEL bus having a plurality of I/O slots for receiving MICRO CHANNEL adapter cards 45 which may be further connected to an I/O device or memory (not shown). The I/O bus 44 includes address, data, and control components.

Coupled along the I/O bus 44 are a variety of I/O components such as a video signal processor 46 which is associated with video RAM (VRAM) for storing graphic information (indicated at 48) and for storing image information (indicated at 49). Video signals exchanged with the processor 46 may be passed through a Digital to Analog Converter (DAC) 50 to a monitor or other display device. Provision is also made for connecting the VSP 46 directly with what is here referred to as a natural image input/output, which may take the form of a video recorder/player, camera, etc. The I/O bus 44 is also coupled with a Digital Signal Processor (DSP) 51 which has associated instruction RAM 52 and data RAM 54 available to store software instructions for the processing of signals by the DSP 51 and data involved in such processing. The DSP 51 provides for processing of audio inputs and outputs by the provision of an audio controller 55, and for handling of other signals by provision of an analog interface controller 56. Lastly, the I/O bus 44 is coupled with a input/output controller 58 with associated Electrical Erasable Programmable Read Only Memory (EEPROM) 59 by which inputs and outputs are exchanged with conventional peripherals including floppy disk drives, a printer or plotter 14, keyboard 12, a mouse or pointing device (not shown), and by means of a serial port.

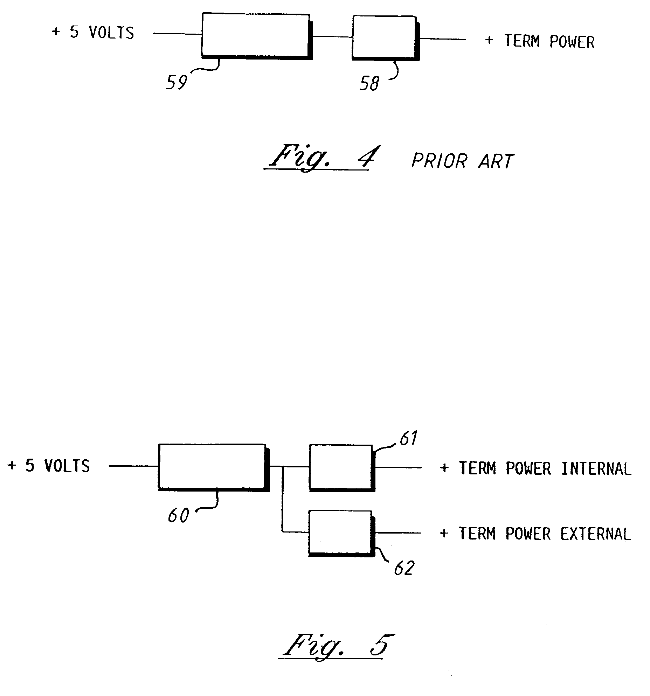

As mentioned hereinabove, it is necessary in any SCSI system to provide power supply to the SCSI storage devices which may be addressed. Such power has typically been derived from a +5 volt portion of a computer power supply and delivered through an arrangement of a current limiting device and an isolation device. A typical prior art arrangement is illustrated in Figure 4. As there shown, a single isolation device (typically a diode 58) is used to insure that no current is drawn from the computer power supply when the controller 40 is powered down or unpowered and no SCSI device is active. A single current limiting device (typically a thermistor 59) is connected in series with the isolation device and used to insure that excessive current drain on the power supply is avoided in any event. The SCSI bus is "open drain" in nature and the two devices mentioned are both resistive in nature, leading to a reduction in the high level of direct current (DC) voltage input to a SCSI receiver in a SCSI device supplied with power. Such input power reduction results in a loss of "noise margin" in the system, namely the difference between the peak voltage supplied and the signal voltage used.

The present invention improves the noise margin by splitting the power supplied and distinguishing between SCSI devices accessed through the system planar board 20 and through an external cable. As herein used, such devices are identified as devices connected through the planar board and devices remote from the planar board. The power supply of this invention is illustrated in Figure 5, where the split is indicated as using a single current limiting device (shown as a thermistor 60) and a pair of isolation devices (shown as first and second diodes 61, 62). Each of the diodes functions for isolating a respective corresponding portion of the SCSI bus to insure that no current is drawn by any SCSI device operatively connected by the respective corresponding portion of the SCSI bus in the event that the SCSI controller is unpowered. That is, one diode isolates the portion of the SCSI bus servicing planar connected devices, while the other isolates the portion of the SCSI bus servicing remote devices.

## Claims

1. A personal computer system comprising a planar board; a central processing unit (CPU) mounted on said planar board; a small computer system interface (SCSI) controller operatively connected with said CPU for controlling transfer of data as directed by said CPU; a SCSI bus having a first SCSI bus portion for operative interconnection of said SCSI controller with any SCSI devices connected through said planar board and a second SCSI bus portion for operative interconnection of said SCSI controller with any SCSI devices mounted remotely from the planar board; and a power supply for supplying electrical power to said CPU and said SCSI controller and to any SCSI devices operatively connected to said SCSI controller by either of said first and said second SCSI bus portions, said power supply having a current limiting device for limiting the current drawn by any SCSI devices operatively connected to said SCSI controller by either of said first and said second SCSI bus portions and further having respective first and second isolation devices each for isolating a respective corresponding portion of said SCSI bus to insure that no current is drawn by any SCSI device operatively connected by said respective corresponding portion of said SCSI bus in the event that said SCSI controller is unpowered.

2. A personal computer system according to Claim 1 wherein said current limiting device is a thermistor.

3. A personal computer system according to Claim 1 or 2 wherein each of said isolation devices is a diode.
